# FASCICULE DE BREVET EUROPEEN

(11) **EP 2 194 092 B1**
(45) Date de publication et mention de la délivrance du brevet: **04.01.2012**
(21) Numéro de dépôt: 09176513.1
(22) Date de dépôt: 19.11.2009
(51) Int. Cl.: C08L 23/00, H01B 3/30

(54) **Cable électrique**
Elektrisches Kabel
Electrical cable

(30) Priorité: 03.12.2008 FR 0858241
(43) Date de publication de la demande: 09.06.2010
(73) Titulaire: Nexans, 75008 Paris (FR)
(72) Inventeur: Koelblin, Christian, 01800 Meximieux (FR); Stuhldreier, Thomas, 75008 PARIS (FR); Daenekas, Franz, 75008 PARIS (FR); Hartley Mark, 75008 PARIS (FR)
(74) Mandataire: Peguet, Wilfried

(56) Documents cités:
- EP-A- 0 223 180
- EP-A- 0 856 545
- GB-A- 931 920
- US-A- 3 382 298
- US-A- 3 413 148
- US-A- 5 514 752

## Description

La présente invention se rapporte à une composition réticulable destinée à être utilisée comme couche électriquement isolante pour câble électrique, de sorte à ce que le câble électrique présente une résistance améliorée au vieillissement en milieu humide sous tension électrique.

Elle s'applique typiquement, mais non exclusivement, aux domaines des câbles d'énergie à moyenne tension, notamment de 6 à 60 kV, ou à haute tension, notamment supérieur à 60 kV, qu'ils soient à courant continu ou alternatif.

Les câbles d'énergie moyenne et haute tension peuvent être en contact avec l'humidité environnante pendant leur durée de vie. La présence de l'humidité combinée à la présence d'un champ électrique ainsi que d'un matériau polymère favorisent la dégradation progressive des propriétés isolantes du câble.

Ce mécanisme de dégradation, bien connu sous les termes « croissance d'arborescences d'eau », peut ainsi mener au claquage du câble concerné et constitue donc une menace considérable pour la fiabilité du réseau de transport d'énergie avec des conséquences économiques bien connues engendrés par les défaillances de courant.

Le document EP 0 223 180 décrit une composition destinée à être utilisée comme couche électriquement isolante pour câble électrique afin de limiter ces arborescences d'eau. Cette composition comprend un copolymère d'oligomère en tant qu'agent réduisant les arborescences d'eau tel qu'un oligomère basé sur un éthylène et un ester alpha-insaturé, et un matériau polymérique pouvant être un polyéthylène, mais aussi un polyvinyle acétal. La quantité de matériau polymérique, notamment de polyéthylène basse densité, utilisé dans les exemples, est d'au moins 95 % en poids dans la composition, le reste de la composition étant constituée par l'oligomère.

Toutefois, même si cette composition permet de réduire les arborescences d'eau, elle n'est de loin pas optimisée pour limiter de façon significative les dégradations liées aux arborescences d'eau.

Le but de la présente invention est de pallier les inconvénients des techniques de l'art antérieur en proposant une nouvelle composition destinée à être utilisée notamment comme couche électriquement isolante pour câble électrique, présentant une résistance aux vieillissements, dans un environnement humide en présence d'un champ électrique, améliorée de façon significative.

La présente invention a pour objet un câble électrique caractérisé en ce qu'il comporte un conducteur électrique entouré par une couche électriquement isolante réticulée obtenue à partir d'une composition réticulable comprenant une matrice polymère, la matrice polymère comprenant une ou plusieurs polyoléfines et un polyvinyle acétal, désigné par « PVA » dans la suite de la description, comme agent réduisant la formation d'arborescences d'eau, la quantité de PVA étant d'au plus 10 % en poids dans la composition, de préférence d'au plus 5 % en poids dans la composition, de préférence d'au plus 3 % en poids dans la composition, et encore plus préférentiellement d'au plus 1 % en poids dans la composition.

On a découvert de façon surprenante que l'utilisation d'une quantité d'au plus 10 % en poids de polyvinyle acétal (PVA) permet de limiter significativement les arborescences d'eau. Une quantité supérieure à 10 % en poids de polyvinyle acétal devient par ailleurs néfaste à une autre propriété essentielle, à savoir l'angle de pertes également appelée tangente delta bien connu de l'homme du métier, qui tend à augmenter de façon significative à cause de la présence en trop grande quantité de PVA qui est un polymère polaire.

En outre, une quantité inférieure à 10 % en poids permet avantageusement de garantir un coût de revient relativement faible de ladite composition. Enfin, la préparation ainsi que la mise en oeuvre de la composition selon l'invention, notamment par extrusion, sont facilitées grâce à la nature chimique du PVA.

Le PVA est un polymère comprenant des groupes hydroxyle (ou vinyle alcool), des groupes acétal (ou vinyle acétal), et éventuellement des groupes acétate (ou vinyle acétate). Il est préparé classiquement à partir d'aldéhydes et de polymères d'alcool polyvinylique.

La structure d'un PVA peut être représentée par la formule générale suivante (I) : 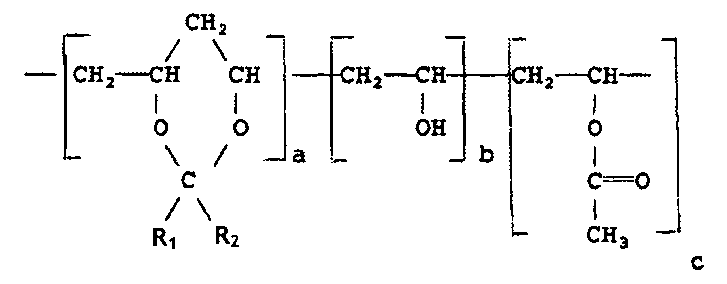 dans laquelle R₁ et R₂ sont identiques ou différents, et peuvent être choisis parmi des hydrogènes et des groupements alkyle en C₁-C₁₀ comme par exemple des groupements méthyle, éthyle, ou butyle.

La formule 1 peut comprendre:
- de 75 à 95 % en poids de groupes vinyle acétal (a),
- de 6 à 30 % en poids de groupes vinyle alcool (b), et
- de 0 à 13 % en poids de groupes vinyle acetate (c).

De préférence, le PVA est un terpolymère de polyvinyle acétal, c'est-à-dire que le PVA comprend les trois groupes a, b et c.

Plus particulièrement, le PVA selon l'invention a une température de transition vitreuse Tg de 50 à 100°C, la température de transition vitreuse étant classiquement mesurée par DSC (pour l'anglicisme « Differential Scanning Calorimetry ») selon la norme ISO 11357.

Selon une autre caractéristique, le PVA a une masse moléculaire de 20 000 à 600 000 g/mol, de préférence de 30 000 à 400 000 g/mol.

Selon une autre caractéristique, la teneur en groupes hydroxyles du PVA est de 7 à 30 % en poids par rapport au polymère d'alcool polyvinylique, de préférence de 12 à 20 % en poids par rapport au polymère d'alcool polyvinylique.

De préférence, la température du point de ramollissement Tr du PVA est d'au moins 70 °C, de préférence d'au moins 80 °C et encore plus préférentiellement d'au moins 90°C, le point de ramollissement Tr étant classiquement mesuré par la méthode bille-anneau selon la norme DIN EN 1427.

Selon une autre caractéristique, la teneur en ions chlorure libres dans le PVA est d'au plus 100 ppm, afin d'obtenir un PVA de haute pureté, la teneur en ions chlorure étant classiquement déterminée selon la norme ISO 6227.

Dans un mode de réalisation particulièrement avantageux, le polyvinyle acétal (PVA) peut être choisi parmi un polyvinyle butyral, désigné par « PVB » dans la suite de la description, et un polyvinyle formal, désigné par « PVF » dans la suite de la description.

Selon la formule 1 décrite ci-avant, R₁=H et R₂=C₃H₇ pour le PVB, et R₁ = H et R₂=H pour le PVF.

Le ou les polyoléfines selon l'invention peuvent être au moins un polymère d'éthylène, de préférence un homopolymère d'éthylène.

Selon un mode de réalisation particulier, le polymère d'éthylène est un homopolyéthylène basse densité, ou en d'autre termes un homopolymère d'éthylène de densité allant de 0,900 g/cm³ à 0,930 g/cm³_{.}

Selon une caractéristique particulière, la matrice polymère a un indice de fluidité (MFI) de 0,8 à 3 g/10 minutes à 190°C, de préférence d'au plus 2 g/10 minutes à 190°C. L'indice de fluidité (MFI) dans la présente invention est typiquement déterminé selon la norme ASTM D1238.

A titre d'exemple, l'indice de fluidité de la matrice polymère peut être atteint en mélangeant le PVA avec un polymère d'éthylène ayant un MFI de 0,8 à 3 g/10 minutes à 190°C. On peut également mélanger le PVA avec deux polymères d'éthylène ayant respectivement un MFI de 0,3 à 0,8 g/10 minutes à 190°C et de 2 à 3 g/10 minutes à 190°C.

De préférence, le MFI de la matrice polymère pour une composition destinée à la fabrication d'une couche électriquement isolante pour un câble à moyenne tension est environ de 2 g/10 minutes à 190°C, et le MFI de la matrice polymère pour une composition destinée à la fabrication d'une couche électriquement isolante pour un câble à haute tension va environ de 0,8 à 1 g/10 minutes à 190°C.

Dans un mode de réalisation particulièrement avantageux, la matrice polymère est constituée d'une ou de plusieurs polyoléfines et de PVA, ou en d'autres termes ladite matrice ne comprend uniquement que une ou plusieurs polyoléfines et du PVA.

La composition selon l'invention peut comprendre au moins 50 % en poids de polyoléfines, de préférence au moins 60 % en poids de polyoléfines, de préférence au moins 70 % en poids de polyoléfines, de préférence au moins 80 % en poids de polyoléfines, et plus préférentiellement au moins 90 % en poids de polyoléfines.

Selon une autre caractéristique de la composition, cette dernière peut comprendre au plus 99,9 % en poids de polyoléfines.

La composition selon l'invention pouvant être extrudée par des techniques bien connues de l'homme du métier, elle peut comprendre en outre un agent stabilisant tel qu'un antioxydant, afin de limiter la dégradation de la matrice polymère lors de sa mise en oeuvre par exemple dans une extrudeuse.

La composition selon l'invention est réticulable. La réticulation de la composition peut s'effectuer par les techniques classiques de réticulation bien connues de l'homme du métier telles que par exemple la réticulation peroxyde et/ou l'hydrosilylation sous l'action de la chaleur ; la réticulation silane en présence d'un agent de réticulation ; la réticulation par faisceaux d'électron, rayons gamma, rayons X, ou microondes ; la réticulation par voie photochimique telle que l'irradiation sous rayonnement béta, ou l'irradiation sous rayonnement ultraviolet en présence d'un photo-amorceur.

La réticulation peroxyde sous l'action de la chaleur est préférée dans le cadre de l'invention. Dans ce cas particulier, la composition comprendre en outre un agent de réticulation tel qu'un peroxyde organique.

Grâce à la réticulation de la composition réticulable pour obtenir la couche électriquement isolante réticulée, le câble électrique de l'invention garde une stabilité dimensionnelle constante en configuration opérationnelle, même lorsque sa température de fonctionnement est élevée, à savoir supérieure à 70°C, voire de l'ordre de 90°C. Le réseau polymérique réticulé de ladite couche électriquement isolante résiste ainsi parfaitement bien aux arborescences d'eau.

Dans un mode de réalisation particulièrement préféré, le câble électrique de l'invention comprend en outre une couche semi-conductrice réticulée (première couche) entre le conducteur électrique et la couche (4) électriquement isolante réticulée (deuxième couche), et une autre couche (5) semi-conductrice réticulée (troisième couche) entourant la couche (4) électriquement isolante réticulée. Les première, deuxième et troisième couches réticulées entourent ainsi successivement le conducteur électrique.

Le terme « semi-conducteur » ou « semi-conductrice » utilisé dans la présente invention doit être également compris comme signifiant « conducteur » ou « conductrice ».

Un autre objet selon l'invention concerne un procédé de fabrication d'un câble électrique tel que décrit ci-avant comportant trois couches successives. Ce procédé comprend les étapes consistant à :
i. extruder et déposer la première couche semi-conductrice autour du conducteur électrique,
ii. extruder et déposer la deuxième couche électriquement isolante autour de ladite première couche,
iii. extruder et déposer la troisième couche semi-conductrice autour de ladite deuxième couche, et
iv. réticuler les première, deuxième et troisième couches.

Dans une variante, les étapes i à iii peuvent être effectuées concomitamment, l'étape iv étant effectuée après la coextrusion et la codéposition des première, deuxième et troisième couches.

Dans une autre variante, l'étape iv peut être effectuée après chacune des étapes i, ii et iii.

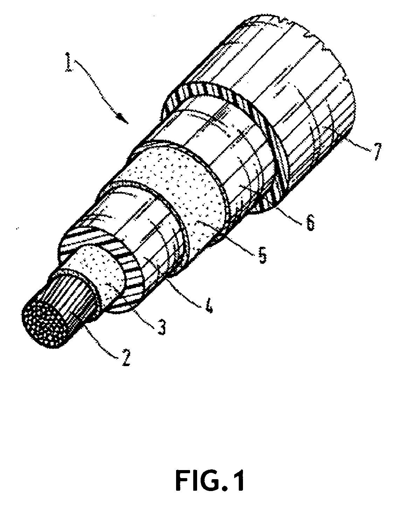

D'autres caractéristiques et avantages de la présente invention apparaîtront à la lumière de la description d'un exemple non limitatif d'un câble électrique selon l'invention fait en référence à la figure 1 représentant une vue schématique en perspective et en coupe d'un câble électrique selon un mode de réalisation préféré conforme à l'invention.

Pour des raisons de clarté, seuls les éléments essentiels pour la compréhension de l'invention ont été représentés de manière schématique, et ceci sans respect de l'échelle.

Le câble d'énergie 1 à moyenne ou haute tension et à courant alternatif, illustré dans la figure 1, comprend un élément conducteur 2 central, notamment en cuivre ou en aluminium, et, successivement et coaxialement autour de cet élément, une couche semi-conductrice 3 dite « interne », une couche électriquement isolante 4 obtenue à partir d'une composition selon l'invention, une couche semi-conductrice 5 dite « externe », un écran métallique de mise à la terre et/ou de protection 6, et une gaine extérieure de protection 7.

Les couches 3, 4 et 5 sont des couches extrudées et réticulées par des procédés bien connus de l'homme du métier.

La présence des couches semi-conductrices 3 et 5, de l'écran métallique de protection 6 et de la gaine extérieure de protection 7 est préférentielle, mais non essentielle. La structure de protection, qui comporte l'écran métallique 6 et la gaine extérieure de protection 7, peut également comporter d'autres éléments de protection tels que notamment une bande de protection, non représentée, gonflante en présence d'eau et semi-conductrice interposée de préférence entre l'écran semi-conducteur externe et l'écran métallique de protection, ou une armure métallique en fils d'acier positionnée de préférence autour de la gaine extérieure de protection 7. La structure de protection de ce câble est en tant que telle de type connu et hors du cadre de la présente invention.

### Exemples

### Fabrication d'un câble électrique comportant une isolation tricouche

Tout d'abord, on prépare des compositions (compositions A à C) dont les constituants sont mentionnés dans le tableau 1 ci-après, lesdits constituants étant exprimés en pourcentage (%) en poids de la composition.

**Tableau 1**

| Composition | | A | B | C |
|---|---|---|---|---|
| PE (% en poids) | | 96,8 | 78,8 | 97,8 |
| Agent réduisant la formation d'arborescences d'eau | PVB 1 (% en poids) | 1 | / | / |
| | EBA (% en poids) | / | 19 | / |
| Antioxydant (% en poids) | | 0,2 | 0,2 | 0,2 |
| Peroxyde (% en poids) | | 2 | 2 | 2 |

L'origine des différents constituants des compositions du tableau 1 est la suivante :
- PE est un homopolymère d'éthylène de basse densité de haute pureté, commercialisé par la société SABIC Europe sous la référence LDPE 2102TX00,
- EBA est un copolymère d'éthylène et d'acrylate de butyle commercialisé par la société Arkema sous la référence Lotryl^{®} 17BA07,
- PVB1 est un polyvinyle butyral sous forme de poudre ayant une transition vitreuse Tg de 84°C, une teneur en alcool vinylique d'environ 16 % et une masse moléculaire d'environ 40000, commercialisé par la société Wacker Polymer Systems GmbH sous la référence Pioloform^{®} BL16,
- Antioxydant est le 4,6-bis (octylthiomethyl)-o-cresol (liquide) commercialisé par la société Ciba Specialty Chemicals sous la référence Irgastab^{®} KV 10, et
- Peroxyde est le tert-butylcumylperoxide (liquide) commercialisé par la société Arkema sous la référence Luperox^{®} 801.

L'ensemble des constituants des compositions A à C sont mélangées respectivement dans une extrudeuse mono-vis du type 38-25D classique munie d'une vis « Maillefer » à une température comprise entre 110°C et 130°C afin d'obtenir une matrice polymère à l'état fondu tout en évitant de déclencher la réticulation prématurée de la composition.

On extrude et on dépose ensuite chacune desdites compositions autour une corde conductrice en cuivre préalablement recouverte d'une première couche semi-conductrice obtenue à partir d'un mélange extrudé commercialisé par la société BOREALIS sous la référence LE0592.

Puis, on extrude et dépose une seconde couche semi-conductrice identique à la première couche semi-conductrice autour de chaque bicouche formé précédemment.

Enfin, les trois couches ainsi formées sont réticulées sous l'action de la chaleur à une température supérieure à la température de décomposition du peroxyde organique compris dans chacune des trois couches.

On obtient ainsi respectivement les câbles électriques A à C comprenant trois couches extrudées et réticulées, dont la couche électriquement isolante comprise entre les deux couches semi-conductrices a été obtenue respectivement à partir des compositions A à C.

### Test de vieillissement et tension de claquage

Pour déterminer les propriétés de résistance aux arborecences d'eau des câbles électriques A à C, on applique la méthode décrite dans le document « Model Cable Test for Evaluating the Aging Behaviour under Water Influence of Compounds for Medium Voltage Cables », H.G. Land et Hans Schädlich, pages 177 à 182, publié lors de la « Conference Proceedings of Jicable 91 », du 24-28 Juin 1991, à Versailles, France.

Cette méthode consiste tout d'abord à vieillir les câbles électriques A à C, mis sous tension alternative, dans un bac d'eau à 70°C pendant 1000 heures. Puis, on effectue un test de claquage sous une tension alternative avec une fréquence de 50Hz sur ces câbles afin de déterminer leur tension de claquage après vieillissement. La tension de claquage du câble correspond à la tension nécessaire pour former un arc électrique au sein du câble. Elle est typiquement ramenée au champ électrique maximum à l'interface entre la couche semi-conductrice interne et la couche électriquement isolante du câble électrique tricouche.

Les résultats des tensions de claquage sont rassemblés dans le tableau 2 ci-après.

**Tableau 2**

| Câble électrique | A | B | C |
|---|---|---|---|
| Valeur initiale [kV/mm] | **105** | **103** | **95** |
| Après 1000 h [kV/mm] | **54** | **55** | **40** |

La tension de claquage des câbles électriques selon la présente invention (câble A) est relativement élevée par rapport au câble C. Par conséquent, la composition électriquement isolante selon l'invention présente une meilleure tenue au vieillissement et une résistance aux arborescences d'eau améliorée.

En outre, on peut constater que la quantité d'agent réduisant la formation d'arborescences d'eau (PVB1) dans la composition A est presque 20 fois inférieure à la quantité d'agent réduisant la formation d'arborescences d'eau (EBA) dans la composition B. La composition A selon l'invention est donc très économique.

### Test de pelabilité

Le test de pelabilité permet de déterminer la force d'amorcement en Newton (N) nécessaire pour décoller deux couches adhérant l'une sur l'autre.

Cette force « d'amorcement de décollage » est mesurée sur un bicouche de forme parallélépipédique d'une largeur de 10 mm, d'une longueur efficace de 40 mm et d'une épaisseur d'environ 2 mm, soit environ 1 mm d'épaisseur pour chaque couche. Le bicouche est constitué d'une couche électriquement isolante et d'une couche semi-conductrice. Il est obtenu par compression-moulage à 125°C de chacune des deux couches, puis par réticulation à 180°C pendant 30 minutes des deux couches positionnées l'une sur l'autre.

Une fois le bicouche formé, on place chacune des deux couches d'une extrémité du bicouche dans les mors respectifs d'une machine de traction, la vitesse de traction étant fixée à 50 mm/min.

Afin de comparer les résultats des mesures du test de pelabilité, trois bicouches sont préparés selon le mode de préparation décrit ci-avant.

Un premier bicouche G1 est préparé à partir de la composition A pour la première couche et d'une composition commercialisée par la société Dow Chemicals sous la référence HFDA-0792 BK pour l'autre couche.

Un second bicouche G2 est préparé à partir de la composition B pour la première couche et de la composition référencée HFDA-0792 BK pour l'autre couche.

Un troisième bicouche G3 est préparé à partir de la composition C pour la première couche et de la composition référencée HFDA-0792 BK pour l'autre couche.

Les résultats obtenus sont rassemblés dans le tableau 3 ci-après.

**Tableau 3**

| Bicouche | G1 | G2 | G3 |
|---|---|---|---|
| Force d'amorcement de décollage (N) | **15,8** | Rupture d'une des couches de G2 avant mesure | **23,4** |

Le test de pelabilité montre qu'il est plus facile de séparer les couches du bicouche G1 que les couches du bicouche G3 puisque la force d'amorcement de G1 est moins importante que celle de G3. Par conséquent, les opérations de raccordement des câbles électriques comprenant le bicouche G1 s'en trouvent facilitées.

Par ailleurs, à tension de claquage identique après 1000 heures de vieillissement, un câble électrique comprenant le bicouche G1, en plus d'un avantage économique provenant de la couche obtenue à partir de la composition A, présente l'avantage d'être pelable contrairement à un câble électrique comprenant le bicouche G2.

## Revendications

1. Câble électrique (1) **caractérisé en ce qu'**il comporte un conducteur électrique (2) entouré par une couche (4) électriquement isolante réticulée obtenue à partir d'une composition réticulable comprenant une matrice polymère, la matrice polymère comprenant une ou plusieurs polyoléfines et un polyvinyle acétal (PVA) comme agent réduisant la formation d'arborescences d'eau, la quantité de PVA étant d'au plus 10 % en poids dans la composition.

2. Câble selon la revendication 1, **caractérisé en ce que** le PVA a une température de transition vitreuse Tg de 50 à 100°C.

3. Câble selon la revendication 1 ou 2, **caractérisé en ce que** le PVA a une masse moléculaire de 30 000 à 600 000 g/mol.

4. Câble selon l'une quelconque des revendications précédentes, **caractérisé en ce que** la température du point de ramollissement Tr du PVA est d'au moins 70 °C.

5. Câble selon l'une quelconque des revendications précédentes, **caractérisé en ce que** la teneur en ions chlorure libres dans le PVA est d'au plus 100 ppm.

6. Câble selon l'une quelconque des revendications précédentes, **caractérisé en ce que** le PVA est choisi parmi un polyvinyle butyral (PVB) et un polyvinyle formal (PVF).

7. Câble selon l'une quelconque des revendications précédentes, **caractérisé en ce que** le ou les polyoléfines sont au moins un polymère d'éthylène, de préférence un homopolymère d'éthylène.

8. Câble selon l'une quelconque des revendications précédentes, **caractérisé en ce que** le polymère d'éthylène est un homopolyéthylène basse densité.

9. Câble selon l'une quelconque des revendications précédentes, **caractérisé en ce que** la matrice polymère a un indice de fluidité de 0,8 à 3 g/10 minutes à 190°C.

10. Câble selon l'une quelconque des revendications précédentes, **caractérisé en ce que** la matrice polymère est constituée du ou desdites polyoléfines et du PVA.

11. Câble selon l'une quelconque des revendications précédentes, **caractérisé en ce qu'**elle comprend au moins 50 % en poids de polyoléfines.

12. Câble selon l'une quelconque des revendications précédentes, **caractérisé en ce qu'**elle comprend en outre un agent stabilisant.

13. Câble selon l'une quelconque des revendications précédentes, **caractérisé en ce qu'**il comprend en outre une couche (3) semi-conductrice réticulée entre le conducteur électrique et la couche (4) électriquement isolante réticulée, et une autre couche (5) semi-conductrice réticulée entourant la couche (4) électriquement isolante réticulée.

## Claims

1. An electric cable (1) **characterized in that** it includes an electric conductor (2) surrounded by a cross-linked electrically insulating layer (4) obtained from a crosslinkable composition comprising a polymeric matrix, the polymeric matrix comprising one or several polyolefins and a polyvinyl acetal (PVA) as an agent reducing the formation of water trees, the amount of PVA being at most 10% by weight in the composition.

2. The cable according to claim 1, **characterized in that** the PVA has a glassy transition temperature Tg from 50 to 100°C.

3. The cable according to claim 1 or 2, **characterized in that** the PVA has a molecular mass from 30,000 to 600,000 g/mol.

4. The cable according to any of the preceding claims, **characterized in that** the temperature of the softening point Tr of the PVA is of at least 70°C.

5. The cable according to any of the preceding claims, **characterized in that** the content of free chlorine ions in the PVA is at most 100 ppm.

6. The cable according to any of the preceding claims, **characterized in that** the PVA is selected from polyvinyl butyral (PVB) and polyvinyl formal (PVF).

7. The cable according to any of the preceding claims, **characterized in that** the polyolefin(s) is(are) at least one polymer of ethylene, preferably a homopolymer of ethylene.

8. The cable according to any of the preceding claims, **characterized in that** the ethylene polymer is low density homopolyethylene.

9. The cable according to any of the preceding claims, **characterized in that** the polymeric matrix has a fluidity index from 0.8 to 3 g/10 minutes at 190°C.

10. The cable according to any of the preceding claims, **characterized in that** the polymeric matrix consists of said polyolefin(s) and of PVA.

11. The cable according to any of the preceding claims, **characterized in that** it comprises at least 50% by weight of polyolefins.

12. The cable according to any of the preceding claims, **characterized in that** it further comprises a stabilizer.

13. The cable according to any of the preceding claims, **characterized in that** it further comprises a cross-linked semiconducting layer (3) between the electric conductor and the cross-linked electrically insulated layer (4), and another cross-linked semiconducting layer (5) surrounding the cross-linked electrically insulating layer (4).

## Patentansprüche

1. Elektrisches Kabel (1), **dadurch gekennzeichnet, dass** es einen elektrischen Leiter (2) aufweist, der von einer vernetzten elektrisch isolierenden Schicht (4) umgeben ist, die aus einer vernetzbaren Zusammensetzung hergestellt ist, die eine Polymermatrix umfasst, wobei die Polymermatrix ein oder mehrere Polyolefine und ein Polyvinylacetat (PVA) als Mittel umfasst, das die Bildung von Wasserbäumchen reduziert, wobei die PVA-Menge höchsten 10 Gew.-% in der Zusammensetzung ist.

2. Kabel nach Anspruch 1, **dadurch gekennzeichnet, dass** das PVA eine Glasübergangstemperatur Tg von 50 bis 100 °C hat.

3. Kabel nach Anspruch 1 oder 2, **dadurch gekennzeichnet, dass** das PVA eine Molekularmasse von 30.000 bis 600.000 g/mol hat.

4. Kabel nach einem der vorangehenden Ansprüche, **dadurch gekennzeichnet, dass** die Temperatur des Erweichungspunkts Tr des PVA mindestens 70 °C beträgt.

5. Kabel nach einem der vorangehenden Ansprüche, **dadurch gekennzeichnet, dass** der Gehalt an freien Chlorionen in dem PVA höchstens 100 ppm beträgt.

6. Kabel nach einem der vorangehenden Ansprüche, **dadurch gekennzeichnet, dass** das PVA aus einem Polyvinylbutyral (PVB) und einem Polyvinylformal (PVF) ausgewählt ist.

7. Kabel nach einem der vorangehenden Ansprüche, **dadurch gekennzeichnet, dass** das oder die Polyolefine mindestens ein Ethylenpolymer, vorzugsweise ein Homopolymerethylen, sind.

8. Kabel nach einem der vorangehenden Ansprüche, **dadurch gekennzeichnet, dass** das Polymerethylen ein Homopolymerethylen geringer Dichte ist.

9. Kabel nach einem der vorangehenden Ansprüche, **dadurch gekennzeichnet, dass** die Polymermatrix einen Fluiditätsindex von 0,8 bis 3 g/10 Minuten bei 190 °C hat.

10. Kabel nach einem der vorangehenden Ansprüche, **dadurch gekennzeichnet, dass** die Polymermatrix aus dem oder den Polyolefinen und dem PVA besteht.

11. Kabel nach einem der vorangehenden Ansprüche, **dadurch gekennzeichnet, dass** es mindestens 50 Gew.-% Polyolefine umfasst.

12. Kabel nach einem der vorangehenden Ansprüche, **dadurch gekennzeichnet, dass** es weiterhin einen Stabilisator umfasst.

13. Kabel nach einem der vorangehenden Ansprüche, **dadurch gekennzeichnet, dass** es weiterhin eine vernetzte halbleitende Schicht (3) zwischen dem elektrischen Leiter und der vernetzten isolierenden elektrischen Schicht (4) umfasst und eine andere vernetzte halbleitende Schicht (5), die die vernetzte elektrisch isolierende Schicht (4) umgibt.
